# EUROPEAN PATENT APPLICATION

(11) **EP 3 699 983 A1**
(43) Date of publication of application: **26.08.2020**
(21) Application number: 18869215.6
(22) Date of filing: 11.10.2018
(51) Int. Cl.: H01M 4/13, H01M 4/62, H01M 4/70, H01M 10/0562, H01M 10/0585

(54) **ELECTRODE LAMINATE, ALL-SOLID LAMINATED SECONDARY CELL, AND METHOD FOR MANUFACTURING SAME**

(30) Priority: 20.10.2017 JP 2017203674
(71) Applicant: FUJIFILM Corporation, Tokyo 106-8620 (JP)
(72) Inventor: IMAI, Shinji, Ashigarakami-gun Kanagawa 258-8577 (JP)
(74) Representative: Hoffmann Eitle
(86) International application number: PCT/JP2018/037997
(87) International publication number: WO 2019/078093

(57) **Abstract**

Provided are an electrode laminate including a negative electrode collector having one surface on which a negative electrode active material can be deposited and a positive electrode active material layer or an unevenness forming particle layer, which is laminated on the other surface of the negative electrode collector, in which the negative electrode collector has a thickness of 15 µm or less, and is a thin laminate formed by laminating the negative electrode collector to follow a surface shape of the positive electrode active material layer or the unevenness forming particle layer; an all-solid state laminated secondary battery using the electrode laminate; and a method for manufacturing the same.

## Description

### BACKGROUND OF THE INVENTION

### 1. Field of the Invention

The present invention relates to an electrode laminate, an all-solid state laminated secondary battery, and a method for manufacturing the same.

### 2. Description of the Related Art

An all-solid lithium ion secondary battery is a storage battery which has a negative electrode, a positive electrode, and an inorganic solid electrolyte layer sandwiched between the negative electrode and the positive electrode and enables charging and discharging by the reciprocal migration of lithium ions between both electrodes. This all-solid lithium ion secondary battery is expected to be applied to electric vehicles, large-sized storage batteries, and the like, and a high energy density is being studied.

As a technique for improving the energy density, a technique for reducing a thickness of a current collector, a technique for not forming (laminating) a negative electrode active material layer in advance, and the like are being studied. For example, an all-solid state laminated secondary battery, in which a negative electrode active material layer forming a negative electrode is formed by using lithium ions contained in a positive electrode active material layer during charging instead of composing the negative electrode active material layer in advance, is proposed (JP2016-035867A).

Furthermore, as another technique, a technique for forming a structure in which an electrode and an electrolyte are arranged in series is being studied. For example, there is proposed an all-solid-state bipolar secondary battery including a plurality of bipolar electrodes in which a positive electrode active material layer, a current collector, and a negative electrode active material layer are laminated in this order (JP2008-103285A).

### SUMMARY OF THE INVENTION

In recent years, technological development of the all-solid state laminated secondary battery has been rapidly progressing, and further improvement in an energy density is required. In a method in which the negative electrode active material layer is formed by charging instead of being formed (laminated) in advance, in a case where the current collector forming the negative electrode (negative electrode collector) is made thin, the all-solid state laminated secondary battery, particularly the energy density (per mass) of the all-solid state laminated secondary battery can be expected to be improved. However, as a result of the study carried out by the present inventors, the all-solid state laminated secondary battery in which the negative electrode active material layer is formed by using the thinned collector during charging was likely to be short-circuited due to the deposited negative electrode active material. In addition, it has been found to cause a new problem that battery capacity is reduced (discharge deterioration) due to charging and discharging, particularly repeated charging and discharging.

An object of the present invention is to provide an electrode laminate in which generation of short-circuit and discharge deterioration can be suppressed by using an all-solid state laminated secondary battery as an electrode even though the battery has a thinned negative electrode collector. Another object of the present invention is to provide an all-solid state laminated secondary battery that exhibits a high energy density and is less likely to generate short-circuit and discharge deterioration, and a method for manufacturing the same.

The present inventors has carried out various studies and found that an electrode laminate includes a negative electrode collector having one surface on which a negative electrode active material can be deposited and a positive electrode active material layer laminated on the other surface, in which the negative electrode collector is set to a specific thickness and laminated to follow a surface shape of the positive electrode active material layer, so that an energy density can be improved, and short-circuit and discharge deterioration can be suppressed in a case where an all-solid state laminated secondary battery is used. Furthermore, the present inventors have found that in a case where a plurality of electrode laminates are laminated in order with a solid electrolyte layer interposed therebetween and are charged in a state of being restrained and pressed, a negative electrode active material layer can be formed on the negative electrode collector without deteriorating firm attachment between the thin layered negative electrode collector deformed to follow the positive electrode active material layer and the solid electrolyte layer. The present invention was completed by repeating additional studies on the basis of the above-described finding.

That is, the above-described objects have been achieved by the following means.
<1> An electrode laminate comprising: a negative electrode collector having one surface on which a negative electrode active material can be deposited; and a positive electrode active material layer containing a positive electrode active material and a solid electrolyte or an unevenness forming particle layer, the positive electrode active material layer or the unevenness forming particle layer being laminated on the other surface of the negative electrode collector, in which the negative electrode collector has a thickness of 15 µm or less, and is a thin laminate formed by laminating the negative electrode collector to follow a surface shape of the positive electrode active material layer or the unevenness forming particle layer.
   That is, the electrode laminate defined in the above <1> includes the following two embodiments.
   <Aspect 1> An electrode laminate comprising: a negative electrode collector having one surface on which a negative electrode active material can be deposited; and a positive electrode active material layer containing a positive electrode active material and a solid electrolyte or an unevenness forming particle layer, the positive electrode active material layer or the unevenness forming particle layer being laminated on the other surface of the negative electrode collector, in which the negative electrode collector has a thickness of 15 µm or less, and is a thin laminate formed by laminating the negative electrode collector to follow a surface shape of the positive electrode active material layer.
   <Aspect 2> An electrode laminate comprising: a negative electrode collector having one surface on which a negative electrode active material can be deposited; and an unevenness forming particle layer laminated on the other surface of the negative electrode collector, in which the negative electrode collector has a thickness of 15 µm or less, and is a thin laminate formed by laminating the negative electrode collector to follow a surface shape of the unevenness forming particle layer.
<2> The electrode laminate according to <1>, in which the one surface of the negative electrode collector has a ten-point average surface roughness Rz of 1.5 µm or less.
<3> An all-solid state laminated secondary battery having at least one electrode laminate according to <1> or <2>.
<4> The all-solid state laminated secondary battery according to <3>, in which the electrode laminate is laminated on a solid electrolyte layer, and at least one of the positive electrode active material of the electrode laminate or the solid electrolyte of the solid electrolyte layer has a metallic element belonging to Group I or II of the periodic table.
<5> The all-solid state laminated secondary battery according to <4>, in which at least one layer of the solid electrolyte layer includes a hot-melt of an electrically insulating material that is a solid at 100°C and is thermally melted at a temperature range of 200°C or lower in one surface-side region of the negative electrode collector.
<6> The all-solid state laminated secondary battery according to <4> or <5>, further comprising a negative electrode active material layer between the one surface of the electrode laminate and the solid electrolyte layer.
<7> A method for manufacturing the all-solid state laminated secondary battery according to <6> comprising: laminating the solid electrolyte layer and the electrode laminate; and restraining and pressing the entire obtained laminate in a laminating direction to charge the restrained and pressed laminate.
<8> The method for manufacturing an all-solid state laminated secondary battery according to <7>, in which the one surface of the negative electrode collector has a ten-point average surface roughness Rz of 1.5 µm or less.

In the present invention, an electrode laminate in which generation of short-circuit and discharge deterioration can be suppressed by using an all-solid state laminated secondary battery as an electrode even though the battery has a thinned collector can be provided. In addition, in the present invention, an all-solid state laminated secondary battery that exhibits a high energy density and is less likely to generate short-circuit and discharge deterioration, and a method for manufacturing the same can be provided.

The above-described and other characteristics and advantages of the present invention will be further clarified by the following description with reference to appropriately accompanied drawings.

### BRIEF DESCRIPTION OF THE DRAWINGS

Fig. 1 is a vertical cross-sectional view schematically illustrating an all-solid state laminated secondary battery according to a preferred embodiment of the present invention.
Fig. 2 is a vertical cross-sectional view schematically illustrating an all-solid state laminated secondary battery according to another preferred embodiment of the present invention.

### DESCRIPTION OF THE PREFERRED EMBODIMENTS

In the present specification, numerical ranges expressed using "to" include numerical values before and after the "to" as the lower limit value and the upper limit value.

In the present specification, the description "(meth)acryl" means methacryl and/or acryl. Furthermore, the description "(meth)acryloyl" means methacryloyl and/or acryloyl.

The indication of compounds (for example, a case where "compound" is added to the end of a word and mentioned) described in the present specification includes not only the compounds themselves but also salts and ions thereof.

### [All-solid state laminated secondary battery]

An all-solid state laminated secondary battery according to an embodiment of the present invention has at least one electrode laminate according to the embodiment of the present invention as an (internal) electrode. In a case of having one electrode laminate, the all-solid state laminated secondary battery according to the embodiment of the present invention has a layer composition (cell unit) in which the electrode laminate is laminated on a solid electrolyte layer and a driving electrode which is laminated on an upper surface and a lower surface of the layer composition and to which an external voltage is applied. In a case of having a plurality of electrode laminates, the all-solid state laminated secondary battery according to the embodiment of the present invention has a layer composition (cell unit) in which the plurality of electrode laminates are laminated with a solid electrolyte layer interposed therebetween and a driving electrode which is laminated on an upper surface and a lower surface of the layer composition. In other words, in the all-solid state laminated secondary battery according to the embodiment of the present invention, a plurality of positive electrodes and negative electrodes (both including the driving electrode and the internal electrode) are disposed with the solid electrolyte layer interposed therebetween. The electrode laminate according to the embodiment of the present invention is a component used for the all-solid state laminated secondary battery, and is used as an (internal) electrode of the all-solid state laminated secondary battery.

At least one of the positive electrode active material or the inorganic solid electrolyte in the all-solid state laminated secondary battery according to the embodiment of the present invention preferably has a metallic element belonging to Group I or II of the periodic table in that the negative electrode active material layer can be formed by charging.

The electrode laminate and the all-solid state laminated secondary battery according to the embodiment of the present invention form the negative electrode active material layer by using the phenomenon in which a part of ions of metal belonging to Group I (alkali metal ions) of the periodic table or ions of metal belonging to Group II (alkaline earth metal ions)of the periodic table, which is accumulated on the negative electrode collector during charging, is bonded to an electron to be deposited on the negative electrode collector (including the interface between the negative electrode collector and the solid electrolyte or the void) as metal. That is, the electrode laminate and the all-solid state laminated secondary battery according to the embodiment of the present invention causes the metal deposited on the negative electrode collector to function as the negative electrode active material layer. For example, metallic lithium is considered to have theoretical capacity of 10 times or more than graphite that is widely used as the negative electrode active material. Therefore, the metallic lithium is deposited on the negative electrode and a solid electrolyte layer is laminated on the deposited metallic lithium, so that a metallic lithium layer can be formed on the negative electrode collector to realize a secondary battery having a high energy density. A battery in which the negative electrode active material layer is not formed (laminated) in advance has the high energy density since a thickness can be reduced.

As described above, in the electrode laminate and the all-solid state laminated secondary battery according to the embodiment of the present invention, the negative electrode active material layer is formed by charging. Therefore, the electrode laminate and the all-solid state laminated secondary battery according to the embodiment of the present invention include both aspects of an uncharged aspect (aspect in which the negative electrode active material is not deposited) and a charged aspect (aspect in which the negative electrode active material is deposited). In the present invention, the all-solid state laminated secondary battery in which the negative electrode active material layer is not formed in advance thoroughly means that the negative electrode active material layer is not formed in a step of forming a layer in battery manufacture. Thus, as described above, the negative electrode active material layer is formed between the solid electrolyte layer and the negative electrode collector by charging.

The compositions of the electrode laminate and the all-solid state laminated secondary battery according to the embodiment of the present invention other than compositions specified in the present invention are not particularly limited, and known compositions relating to the all-solid state laminated secondary battery can be employed.

Hereinafter, a preferred aspect of the all-solid state laminated secondary battery the present invention will be described together with a preferred aspect of the electrode laminate of the present invention.

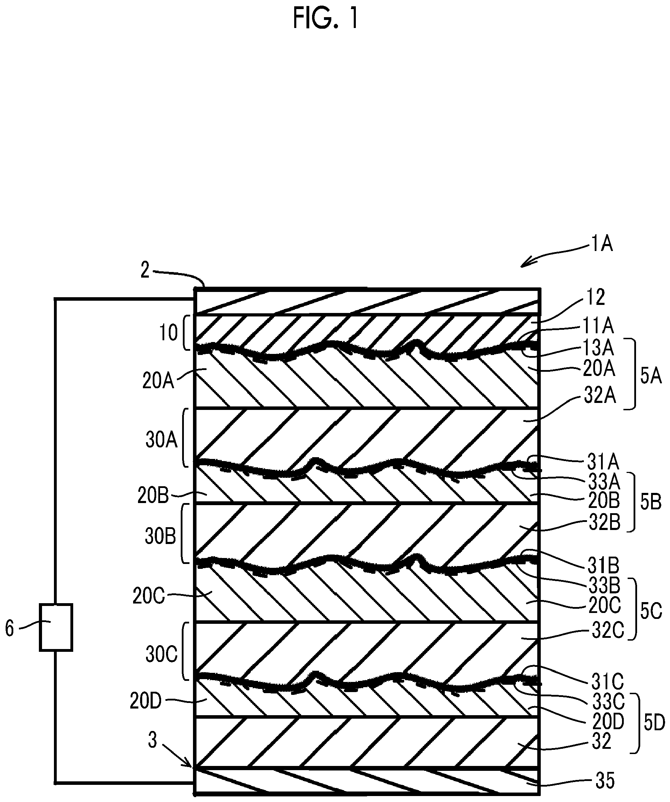

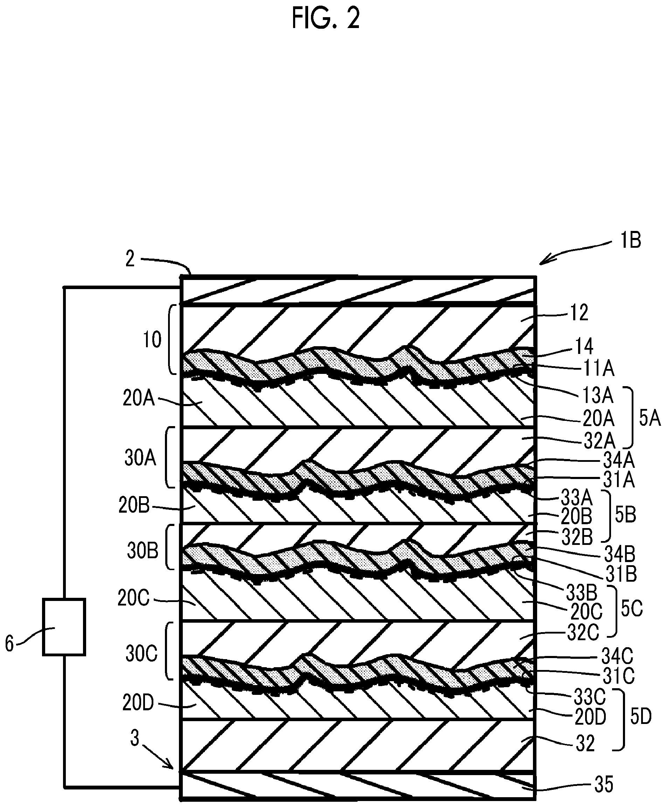

In Figs. 1 and 2, the same components (members) are denoted by the same reference numerals.

Figs. 1 and 2 are schematic diagrams for easy understanding of the present invention, and in some cases, a size or a relative magnitude relationship of each member of the all-solid state laminated secondary battery shown in Figs. 1 and 2 may be changed for the convenience of explanation, and the actual relationship is not directly shown.

Fig. 1 is a cross-sectional view schematically illustrating an all-solid state laminated secondary battery (all-solid state laminated lithium ion secondary battery) 1A according to a preferred embodiment of the present invention. The all-solid state laminated secondary battery 1A according to an embodiment of the present embodiment is a battery in which four electrode laminates are laminated with a solid electrolyte interposed therebetween. The electrode laminate 10 includes a negative electrode active material layer 13A on one surface of a negative electrode collector 11A and an unevenness forming particle layer 12 on the other surface. The electrode laminates 30A to 30C have negative electrode active material layers 33A to 33C on one surface of each of the negative electrode collectors 31A to 31C and positive electrode active material layers 32A to 32C on the other surface, respectively.

The all-solid state laminated secondary battery 1A includes the electrode laminate 10, a solid electrolyte layer 20A, the electrode laminate 30A, a solid electrolyte layer 20B, the electrode laminate 30B, a solid electrolyte layer 20C, the electrode laminate 30C, a solid electrolyte layer 20D, and a positive electrode 3 are provided in this order, when viewed from the negative electrode 2 side. Furthermore, the all-solid state laminated secondary battery 1A includes negative electrode active material layers 13A and 33A to 33C that consist of the deposited metal (lithium metal in this example) on the negative electrode collectors 11A and 31A to 31C of four electrode laminates, respectively. The respective layers are in contact with one another and have a laminated structure.

In the all-solid state laminated secondary battery 1A, the electrode laminate 10 is in contact with the negative electrode 2 (negative electrode collector) via the unevenness forming particle layer 12. On the other hand, each of the electrode laminates 30Ato 30C is sandwiched between the solid electrolyte layers on both surfaces thereof, and not in contact with the negative electrode 2 or the positive electrode 3. Therefore, the all-solid state laminated secondary battery 1A is referred to as a so-called bipolar electrode or internal electrode (with or without the negative electrode active material layer). In addition, the negative electrode 2 and the positive electrode 3 which are connected to an operation portion 6 and to which an external voltage is applied are referred to as driving electrodes.

This all-solid state laminated secondary battery 1A has four cell units each including a solid electrolyte and active material layers on solid electrode sides of two respective electrode laminates laminated with the solid electrolyte sandwiched therebetween. A first cell unit 5A includes the negative electrode active material layer 13A of the electrode laminate 10, the solid electrolyte layer 20A, and the positive electrode active material layer 32A of the electrode laminate 30A. A second cell unit 5B includes the negative electrode active material layer 33A of the electrode laminate 30A, the solid electrolyte layer 20B, and the positive electrode active material layer 32B of the electrode laminate 30B. Similarly, a third cell unit 5C includes the negative electrode active material layer 33B of the electrode laminate 30B, the solid electrolyte layer 20C, and the positive electrode active material layer 32C of the electrode laminate 30C. A fourth cell unit 5D includes the negative electrode active material layer 33C of the electrode laminate 30C, the solid electrolyte layer 20D, and the positive electrode active material layer 32 of the positive electrode 3.

In the all-solid state laminated secondary battery 1A, a plurality of components, for example, the electrode laminates may be all the same or different from each other.

The all-solid state laminated secondary battery 1A functions as a secondary battery as described below.

That is, in each cell unit, during charging, electrons (e⁻) flow to the negative electrode side or the negative electrode active material layer side, and lithium is deposited and accumulated thereon. On the other hand, during discharging, lithium accumulated on the negative electrode side or the negative electrode active material layer side becomes lithium ions (Li⁺), and is returned to the positive electrode side or the positive electrode active material layer side. In the entire all-solid state laminated secondary battery 1A, electrons flow to the electrode laminate 10 via an external circuit 6 during charging, and electrons are returned to the positive electrode 3 via the external circuit 6 during discharging.

The all-solid state laminated secondary battery 1A has the above-described structure, so that electrons flow at a high energy density. In addition, short-circuit and discharge deterioration are hardly generated.

Although the all-solid state laminated secondary battery 1A is shown as a secondary battery which is charged in advance, and in which the negative electrode active material layers 13A and 33A to 33C are formed, as described above, the all-solid state laminated secondary battery according to the embodiment of the present invention also includes the battery also includes a secondary battery in which the negative electrode active material layers 13A and 33A to 33C are not formed.

Fig. 2 is a cross-sectional view schematically illustrating an all-solid state laminated secondary battery (all-solid state laminated lithium ion secondary battery) 1B according to another preferred embodiment of the present invention. The all-solid state laminated secondary battery 1B according to an embodiment of the present embodiment is different from the all-solid state laminated secondary battery 1A in that the electrode laminate includes an auxiliary collectors 14 and 34A to 34C disposed between the negative electrode collectors 11A and 31A to 31C and the unevenness forming particle layer 12 or the positive electrode active material layers 32A to 32C. However, other than this difference, a composition thereof is the same as the all-solid state laminated secondary battery 1A.

Hereinafter, preferred aspects of members and compounds included in a photoelectric conversion element of the present invention will be described.

### <Electrode Laminate>

The electrode laminate according to the embodiment of the present invention includes the negative electrode collector having one surface on which a negative electrode active material can be deposited, and the positive electrode active material layer or the unevenness forming particle layer, which is laminated on the other surface. The electrode laminate includes the negative electrode collector having a surface on which the negative electrode active material can be deposited, and the positive electrode active material layer or the unevenness forming particle layer, which is laminated on a rear surface (the other surface with respect to the above surface) of the negative electrode collector. The positive electrode active material layer or the unevenness forming particle layer may be laminated adjacent to the other surface, or may be laminated with another layer interposed therebetween, for example, the auxiliary collector described later.

In the electrode laminate, the negative electrode collector is laminated to follow a surface shape of the positive electrode active material layer or the unevenness forming particle layer (deformed along the surface shape). In the present invention, "the negative electrode collector is laminated to follow the surface shape of the positive electrode active material layer or the unevenness forming particle layer (hereinafter, referred to as the positive electrode active material layer or the like)" means that the negative electrode collector has a (surface) shape following the surface shape of the positive electrode active material layer or the like, in other words, has a (surface) shape corresponding to the surface shape of the positive electrode active material layer or the like. In the present invention, "the following shape or the corresponding shape" means that it is not limited to the shape in which the negative electrode collector completely follows or corresponds to the surface shape of the positive electrode active material layer or the like so as to be in contact therewith without any void, and includes a shape in which a void exists between the positive electrode active material layer or the like and the negative electrode collector within a range so as not to deteriorate a function effect. The negative electrode collector is generally deformed into the shape in which the void is formed between the negative electrode collector and the surface of the positive electrode active material layer or the like, and a degree of the deformation, for example, the closest distance between a peak where the current collector is deformed to protrude toward the positive electrode active material layer side and the unevenness forming particle layer side and positive electrode active material particles or unevenness forming particles is about 0.1 to 10 µm.

A deformation state or a deformation amount of the negative electrode collector can be appropriately set depending on materials and thickness or hardness of the negative electrode collector, materials and particle diameter or hardness of the positive electrode active material or the unevenness forming particles, pressure or time during the pressing or the restraining and pressing, and an interlayer or the like further provided between the positive electrode active material and the current collector.

In the electrode laminate, the maximum amplitude of undulation of the deformed negative electrode collector (wave form of the negative electrode collector in a region of 200 µm when any cross-section of the electrode laminate is observed by a scanning electron microscope (SEM)) is preferably 0.1 times or more, more preferably 0.2 times or more, even more preferably 0.22 times or more with respect to an average particle diameter of the positive electrode active materials or the like. Therefore, stress concentration due to aggregation of lithium dendrite deposited on the current collector can be reduced, and crack generation in the solid electrolyte layer can be prevented.

A specimen having any cross-section subjected to argon ion milling is used for the observation with SEM.

The maximum amplitude of undulation is defined the maximum amplitude of a highfrequency component (short-period wave form having a length as a period less than five times the average particle diameter of the positive electrode active material) obtained after removing a low-frequency component (long-period wave form) having a length (period) five times or more than the average particle diameter of the positive electrode active material or the like in the region of 200 µm of an image observed by SEM. The average particle diameter of the positive electrode active material or the like described herein is an average particle diameter determined by measuring diameters (diameter calculated in terms of equivalent area) of any hundred positive electrode active material particles or any hundred unevenness forming particles in the image observed by SEM as an average value.

In a case where the negative electrode collector having a thickness of 15 µm or less is used as a current collector of the all-solid state laminated secondary battery in order to increase the energy density, a surface thereof is generally flat, so that the flat surface becomes the contact surface in contact with the solid electrolyte or the solid electrolyte layer. In a case where lithium dendrite is deposited at an interface of the contact surface under the restrained pressure, the stress concentrates on the interface between the deposited lithium dendrite and the solid electrolyte, and cracks may be generated in the solid electrolyte. However, in the present invention, the negative electrode collector is deformed to follow the surface shape of the positive electrode active material layer due to the thin laminate thereof, and the surface on which the solid electrolyte layer is laminated is also formed in a shape following the surface shape of the positive electrode active material layer. Therefore, even though the negative electrode collector has the flat surface, the current collector is deformed into undulation having the highfrequency component as the maximum amplitude, so that flexibility for local volume expansion and contraction due to deposition and dissolution of lithium dendrite is generated. As a result, it is possible to suppress generation of short-circuit due to lithium dendrite and generation of discharge deterioration caused by generation of interfacial peeling due to charging and discharging.

### - Negative electrode collector -

The negative electrode collector used in the present invention may be a current collector having a surface on which the negative electrode active material can be deposited, that is, a current collector having at least one surface on which the negative electrode active material can be deposited, and may also be a current collector having the other surface (rear surface) on which the negative electrode active material can be deposited. An example of such a negative electrode collector includes a thin laminate formed of materials from which the negative electrode active material can be deposited.

The materials for forming the negative electrode collector may be materials from which the negative electrode active material can be deposited during charging of the all-solid state laminated secondary battery, preferably materials hardly forming an alloy with lithium, and even more preferably an electronic conductor. As such a material, for example, in addition to copper, copper alloy, stainless steel, nickel, titanium, and the like, stainless steel of which a surface is preferably treated by nickel or titanium (thin film is formed), and among these, stainless steel and nickel are more preferred.

Regarding the shape of the negative electrode collector, generally, negative electrode collectors having a film sheet-like shape are used, but it is also possible to use, in addition to the negative electrode collector having the film sheet-like shape, net-shaped collectors, punched collectors, compacts of lath bodies, porous bodies, foaming bodies, or fiber groups, and the like, as long as for example, it is possible to prevent the negative electrode active material layer and the positive electrode active material layer that are laminated with the negative electrode collector interposed therebetween from being in contact with each other such as a case of having an auxiliary collector described later.

In terms of deformability, the thickness of the negative electrode collector is 15 µm or less, preferably 10 µm or less, and more preferably 8 µm or less. The lower limit of the thickness is not particularly limited, but is generally 3 µm or more.

In the negative electrode collector, the ten-point average surface roughness Rz of the surface on which the negative electrode active material can be deposited is preferably 1.5 µm or less, more preferably less than 1.5 µm, even more preferably 1.3 µm or less, and particularly preferably 1.1 µm or less. The thinned collector generally has no surface treatment and has a flat surface in order to maintain mechanical characteristics. In the present invention, as described above, since high adhesiveness to the positive electrode active material layer can be ensured by deformation of the negative electrode collector, a thin laminate having the above thickness can be used. Therefore, it is possible to achieve both improving the high energy density and preventing generation of short-circuit and discharge deterioration as a high level.

The ten-point average surface roughness (Rz) of the negative electrode collector can be measured, based on JIS B 0601: 2001, as a distance between two parallel lines passing through the third from the highest peak and the third from the lowest valley within the range of 200 µm length of a reference from the cross-sectional curve.

### - Auxiliary collector -

In the present invention, the negative electrode collector may have an auxiliary collector on the other surface on which a positive electrode active material layer described later is formed. The auxiliary collector having characteristics that do not disturb the deformation of the negative electrode collector is selected and is more preferably selected as an electronic conductor. Examples thereof include aluminum, an aluminum alloy, copper, a copper alloy, titanium, or the like, and furthermore, preferably include aluminum or a material in which carbon treatment is performed on a surface (material formed with a thin film), and among these, aluminum and an aluminum alloy are more preferred.

Hardness, thickness, and surface roughness of the auxiliary collector are not particularly limited as long as the above characteristics are exhibited. The thickness can be set to, for example, 10 to 20 µm.

### - Positive Electrode Active Material Layer -

In the present invention, the electrode laminate having the positive electrode active material layer is generally used as an internal electrode as shown in Figs. 1 and 2.

The positive electrode active material layer contains a positive electrode active material and a solid electrolyte and contains other components as desired.

The positive electrode active material is a material capable of inserting and releasing ions of metal belonging to Group I or II of the periodic table, and the positive electrode active material used in the all-solid state laminated secondary battery according to the embodiment of the present invention can preferably reversibly insert and release lithium ions. The positive electrode active material preferably has a metallic element belonging to Group I or II of the periodic table in that the negative electrode active material layer can be formed by charging. The positive electrode active material is not particularly limited as long as the material has the above-described characteristics and may be transition metal oxides, organic substances, elements capable of being complexed with Li such as sulfur, complexes of sulfur and metal, or the like.

Among these, as the positive electrode active material, transition metal oxides are preferably used, and transition metal oxides having a transition metal element M^{a} (one or more elements selected from Co, Ni, Fe, Mn, Cu, and V) are more preferred in that the negative electrode collector having the hardness higher than the negative electrode collector can be deformed. In addition, an element M^{b} (an element of Group I (Ia) of the metal periodic table other than lithium, an element of Group II (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element M^{a}. The positive electrode active material is more preferably synthesized by mixing the element into the transition metal oxide so that the molar ratio of Li/M^{a} reaches 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), lithium-containing transition metal silicate compounds (ME), and the like.

Specific examples of the transition metal oxides having a bedded salt-type structure (MA) include LiCoO₂ (lithium cobalt oxide [LCO]), LiNi₂O₂ (lithium nickelate) LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Specific examples of the transition metal oxides having a spinel-type structure (MB) include LiMn₂O₄ (LMO), LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compounds (MC) include olivine-type iron phosphate salts such as LiFePO₄ and Li₃Fe₂(PO₄)₃, iron pyrophosphates such as LiFeP₂O₇, and cobalt phosphates such as LiCoPO₄, and monoclinic nasicon-type vanadium phosphate salt such as Li₃V₂(PO₄)₃ (lithium vanadium phosphate).

Examples of the lithium-containing transition metal halogenated phosphoric acid compounds (MD) include iron fluorophosphates such as Li₂FePO₄F, manganese fluorophosphates such as Li₂MnPO₄F, cobalt fluorophosphates such as Li₂CoPO₄F.

Examples of the lithium-containing transition metal silicate compounds (ME) include Li₂FeSiO₄, Li₂MnSiO₄, Li₂CoSiO₄, and the like.

In the present invention, a Li element is preferably contained, the transition metal oxides preferably have a bedded salt-type structure (MA), and LCO or NMC is more preferred in that the negative electrode active material layer can be formed by charging.

The positive electrode active material is preferably in a particle shape even in the positive electrode active material layer, and in this case, an average particle diameter D50 (median diameter) of the positive electrode active materials is preferably 1 µm or more. In the case where the average particle diameter D50 of the positive electrode active materials is 1 µm or more, the negative electrode collector can be deformed to follow the surface shape of the positive electrode active material layer. The average particle diameter D50 is more preferably 2 µm or more, and even more preferably 5 µm or more in terms of adhesiveness to an inorganic solid electrolyte due to deformation. The upper limit of the average particle diameter D50 is not particularly limited, but can be generally 50 µm or less, and for example, preferably 20 µm or less. In order to provide a predetermined particle diameter to the positive electrode active material, an ordinary crusher or classifier may be used. Positive electrode active materials obtained using a firing method may be used after being washed with water, an acidic aqueous solution, an alkaline aqueous solution, or an organic solvent. The average particle diameter D50 of positive electrode active material particles can be measured using a laser diffraction/scattering-type particle diameter distribution measurement instrument LA-920 (trade name, manufactured by Horiba Ltd.).

The positive electrode active material may be used singly or two or more positive electrode active materials may be used in combination.

The content of the positive electrode active material in the positive electrode active material layer is not particularly limited, but is preferably 10% to 95% by mass, more preferably 30% to 90% by mass, still more preferably 50% to 85% by mass, and particularly preferably 55% to 80% by mass.

The thickness of the positive electrode active material layer is not particularly limited, but is preferably 10 to 1,000 µm, more preferably 20 µm or more and less than 500 µm, and even more preferably 50 µm or more and less than 500 µm.

Details of the inorganic solid electrolyte contained in the positive electrode active material layer will be described later.

The inorganic solid electrolyte may be used singly or two or more inorganic solid electrolytes may be used in combination.

The content of the inorganic solid electrolyte in the positive electrode active material layer is not particularly limited, but a total content of the positive electrode active material is preferably 5% by mass or more, more preferably 10% by mass or more, even more preferably 20% by mass or more, still even more preferably 50% by mass or more, particularly preferably 70% by mass or more, and most preferably 90% by mass or more. The upper limit is not limited as long as the content is 100% by mass or less, but for example, preferably 99.9% by mass or less, more preferably 99.5% by mass or less, and particularly preferably 99% by mass or less.

The positive electrode active material layer may contain, as other components, a conductive auxiliary agent, a binder for binding the inorganic solid electrolyte and the positive electrode active material, a dispersant, a lithium salt, an ionic liquid, and the like. Each of the components generally used for a positive electrode active material layer or an inorganic solid electrolyte layer of the all-solid state laminated secondary battery can be used.

### - Unevenness forming particle layer -

In the present invention, the electrode laminate having the unevenness forming particle layer is preferably disposed adjacent to the negative electrode 2 as shown in Figs. 1 and 2.

The unevenness forming particle layer may be a layer (unevenness forming particle layer) containing unevenness forming particles that can be deformed to follow the surface shape of the unevenness forming particle layer by forming protrusions and recesses on the negative electrode collector, and the other components may be contained. The unevenness forming particles are not necessary to form a layer, and may be dispersed or scattered as long as the particles exist in a state of causing the negative electrode collector to be deformed.

The unevenness forming particles may be unevenness forming particles capable of forming protrusions and recesses on the negative electrode collector to be deformed, and an electronic conductor is preferred. Examples of materials for forming the particles include materials having higher hardness than the negative electrode collector, and specifically include, in addition to the positive electrode active material, steel beads, stainless beads, stainless nano powder, and the like. Among these, stainless steel beads are preferred.

The particle diameter of the unevenness forming particles is not particularly limited, but is preferably the same as the above-described positive electrode active material.

The thickness and the surface roughness of the unevenness forming particle layer are not particularly limited, but for example, the thickness can be set to 1 to 100 µm.

### - Negative electrode active material layer -

In a case where the all-solid state laminated secondary battery according to the embodiment of the present invention is charged, as described above, the negative electrode active material layer consisting of metal that is deposited on one surface of the negative electrode collector (the surface on which the negative electrode active material can be deposited) and that is belonging to Group I or Group II of the periodic table (in the present embodiment, lithium metal) is formed.

The negative electrode active material layer is deposited on the surface of the negative electrode collector, generally, between the negative electrode collector and the solid electrolyte layer (the negative electrode collector and the interface between the negative electrode collector and the solid electrolyte, or the negative electrode collector and the void defined by the solid electrolyte). Therefore, in the negative electrode active material layer, the deposited metal is not necessary to be in a layered state and may be in a state of being dispersed or scattered at the interface or the void as long as it is possible to exist at the interface or the void to supply electrons to the negative electrode active material layer side. The formation (deposition of the metal) and the deposition state of the negative electrode active material layer can be confirmed by observing the cross-section with an electron microscope or the like.

The thickness of the negative electrode active material layer depends on the charging and discharging amount and cannot be uniquely determined. That is, a metal deposition amount increases by charging, and the metal deposited by discharging becomes ions so as to disappear. As an example, the thickness at the time of maximum charging can be 1 to 10 µm. The thickness of the negative electrode active material layer is an average distance from one surface of the negative electrode collector to the deposited metal in an image observed by SEM.

A method for manufacturing an electrode laminate will be described together with manufacturing of an all-solid state laminated secondary battery.

### <Solid electrolyte layer>

The solid electrolyte layer is disposed between two electrode laminates. Specifically, the solid electrolyte layer is disposed between the negative electrode collector on one electrode laminate and the positive electrode active material layer on the other electrode laminate. In addition, as shown in Fig. 1, the solid electrolyte layer is also disposed at a position required to function as a battery, for example, at a driving electrode side.

The solid electrolyte layer contains a solid electrolyte, preferably an electrically insulating material, and the above described other components as desired.

The solid electrolyte is an inorganic solid electrolyte, and the solid electrolyte refers to a solid-form electrolyte capable of migrating ions therein. The inorganic solid electrolyte is clearly differentiated from organic solid electrolytes (high-molecular-weight electrolytes represented by polyethylene oxide (PEO) or the like and organic electrolyte salts represented by lithium bis(trifluoromethanesulfonyl)imide (LiTFSI)) since the inorganic solid electrolyte does not include any organic substances as a principal ion conductive material. In addition, the inorganic solid electrolyte is a solid in a static state and thus, generally, is not disassociated or liberated into cations and anions. Due to this fact, the inorganic solid electrolyte is also clearly differentiated from inorganic electrolyte salts of which cations and anions are disassociated or liberated in electrolytic solutions or polymers (LiPF₆, LiBF₄, LiFSI, LiCl, and the like). The inorganic solid electrolyte is not particularly limited as long as the inorganic solid electrolyte has conductivity of an ion of a metal belonging to Group I or II of the periodic table and is generally a substance not having electron conductivity.

In the present invention, the inorganic solid electrolyte has conductivity of an ion of a metal belonging to Group I or II of the periodic table. The inorganic solid electrolyte preferably has a metal element belonging to Group I or II of the periodic table in that a negative electrode active material layer can be formed by charging. As the inorganic solid electrolyte, it is possible to appropriately select and use solid electrolyte materials that are applied to this kind of products. As the inorganic solid electrolyte, generally, (i) sulfide-based inorganic solid electrolytes and/or (ii) oxide-based inorganic solid electrolytes are used, and sulfide-based inorganic solid electrolytes are preferred.

These inorganic solid electrolytes are softer than the positive electrode active material and the negative electrode collector, follow the deformation of the negative electrode collector, and are closely attached thereto.

### (i) Sulfide-based inorganic solid electrolytes

Sulfide-based inorganic solid electrolytes are preferably compounds which contain sulfur atoms (S), have ion conductivity of metals belonging to Group I or II of the periodic table, and have electron-insulating properties. The sulfide-based inorganic solid electrolytes are preferably inorganic solid electrolytes which, as elements, contain at least Li, S, and P and have a lithium ion conductivity, but the sulfide-based inorganic solid electrolytes may also include elements other than Li, S, and P depending on the purposes or cases.

For example, lithium ion conductive inorganic solid electrolyte satisfying a composition represented by Formula (I) is exemplified.

Lₐ₁M_{b1}P_{c1}S_{d1}Aₑ₁ Formula (I)

In the formula, L represents an element selected from Li, Na, and K and is preferably Li. M represents an element selected from B, Zn, Sn, Si, Cu, Ga, Sb, Al, and Ge. A represents an element selected from I, Br, Cl, and F. al to e1 represent the compositional ratios among the respective elements, and al:bl:cl:dl:el satisfies 1 to 12:0 to 5:1:2 to 12:0 to 10. al is preferably 1 to 9 and more preferably 1.5 to 7.5. b1 is preferably 0 to 3 and more preferably 0 to 1. dl is preferably 2.5 to 10 and more preferably 3.0 to 8.5. e1 is preferably 0 to 5 and more preferably 0 to 3.

The compositional ratios among the respective elements can be controlled by adjusting the ratios of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide (Li₂S), phosphorus sulfide (for example, diphosphoruspentasulfide (P₂S₅)), a phosphorus single body, a sulfur single body, sodium sulfide, hydrogen sulfide, lithium halides (for example, Lil, LiBr, and LiCl), or sulfides of an element represented by M (for example, SiS₂, SnS, and GeS₂).

The ratio between Li₂S and P₂S₅ in Li-P-S-based glass and Li-P-S-based glass ceramic is preferably 60:40 to 90:10 and more preferably 68:32 to 78:22 in terms of the molar ratio between Li₂S:P₂S₅. In a case in which the ratio between Li₂S and P₂S₅ is set in the above-described range, it is possible to increase the lithium ion conductivity. Specifically, the lithium ion conductivity can be preferably set to 1 × 10⁻⁴ S/cm or more and more preferably set to 1 × 10⁻³ S/cm or more. The upper limit is not particularly limited, but realistically 1 × 10⁻¹ S/cm or less.

As specific examples of the sulfide-based inorganic solid electrolytes, combination examples of raw materials will be described below. Examples thereof include Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, and the like. Mixing ratios of the respective raw materials do not matter. Examples of a method for synthesizing sulfide-based inorganic solid electrolyte materials using the above-described raw material compositions include an amorphorization method. Examples of the amorphorization method include a mechanical milling method, a solution method, and a melting quenching method. This is because treatments at a normal temperature become possible, and it is possible to simplify manufacturing steps.

### (ii) Oxide-based inorganic solid electrolytes

Oxide-based inorganic solid electrolytes are preferably compounds which contain oxygen atoms (O), have an ion conductivity of metals belonging to Group I or II of the periodic table, and have electron-insulating properties. The ion conductivity of the oxide-based inorganic solid electrolyte is preferably 1 × 10⁻⁶ S/cm or more, more preferably 5 × 10⁻⁶ S/cm or more, and particularly preferably 1 × 10⁻⁵ S/cm or more. The upper limit is not particularly limited, but realistically 1 × 10⁻¹ S/cm or less.

Specific examples of the compounds include LiₓₐLa_{ya}TiO₃ [xa = 0.3 to 0.7 and ya = 0.3 to 0.7] (LLT), Li_{xb}La_{yb}Zr_{zb}M^{bb}_{mb}O_{nb} (M^{bb} is at least one element of Al, Mg, Ca, Sr, V, Nb, Ta, Ti, Ge, In or Sn, xb satisfies 5 ≤ xb ≤ 10, yb satisfies 1≤yb ≤ 4, zb satisfies 1 ≤ zb ≤ 4, mb satisfies 0 ≤ mb ≤ 2, and nb satisfies 5 ≤ nb ≤ 20.), Li_{xc}B_{yc}M^{cc}_{zc}O_{nc} (M^{cc} is at least one element of C, S, Al, Si, Ga, Ge, In, or Sn, xc satisfies 0 ≤ xc ≤ 5, yc satisfies 0 ≤ yc ≤ 1, zc satisfies 0 ≤ zc ≤ 1, and nc satisfies 0 ≤ nc ≤ 6), Liₓa(Al, Ga)_{yd}(Ti, Ge)_{zd}Si_{ad}P_{md}O_{nd} (1 ≤ xd ≤ 3, 0 ≤ yd ≤ 1, 0 ≤ zd ≤ 2, 0 ≤ ad ≤ 1, 1 ≤ md ≤ 7, 3 ≤ nd ≤ 13), Li₍₃₋₂ₓₑ₎M^{ee}ₓₑD^{ee}O (xe represents a number of 0 or more and 0.1 or less, and M^{ee} represents a divalent metal atom. D^{ee} represents a halogen atom or a combination of two or more halogen atoms.), Li_{xf}Si_{yf}O_{zf} (1 ≤ xf ≤ 5, 0 < yf ≤ 3, 1 ≤ zf ≤ 10), Li_{xg}S_{yg}O_{zg} (1 ≤ xg ≤ 3, 0 < yg ≤ 2, 1 ≤ zg ≤ 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w satisfies w<l), Li_{3.5}Zn_{0.25}GeO₄ having a lithium super ionic conductor (LISICON)-type crystal structure, La_{0.55}Li_{0.35}TiO₃ having a perovskite-type crystal structure, LiTi₂P₃O₁₂ having a natrium super ionic conductor (NASICON)-type crystal structure, Li_{1+xh+yh}(Al, Ga)ₓₕ(Ti, Ge)₂₋ₓₕSi_{yh}P_{3-yh}O₁₂ (0 ≤ xh < 1, 0 ≤ yh ≤ 1), Li₇La₃Zr₂O₁₂ (LLZ) having a garnet-type crystal structure. In addition, phosphorus compounds containing Li, P, and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like), and the like. It is also possible to preferably use LiA¹ON (A¹ represents at least one element selected from Si, B, Ge, Al, C, Ga, or the like) and the like.

The inorganic solid electrolyte preferably has a particle form. In this case, the average particle diameter D50 of the inorganic solid electrolyte particles is not particularly limited, but is preferably 0.01 µm or more and more preferably 0.1 µm or more. The upper limit is preferably 100 µm or less and more preferably 50 µm or less. The average particle diameter D50 of the inorganic solid electrolyte particles is measured in the following order. The inorganic solid electrolyte particles are diluted and prepared to one percent by mass of a dispersion liquid by using water (heptane in a case in which the inorganic solid electrolyte is unstable in water) in a 20 mL sample bottle. The diluted dispersion specimen is irradiated with 1 kHz ultrasonic waves for 10 minutes and is then immediately used for testing. Data capturing is carried out 50 times using this dispersion liquid specimen, a laser diffraction/scattering-type particle size distribution measurement instrument LA-920 (manufactured by Horiba Ltd.), and a quartz cell for measurement at a temperature of 25°C, thereby obtaining the average particle diameter D50. Regarding other detailed conditions and the like, the description of JIS Z 8828:2013 "particle diameter analysis-Dynamic light scattering method" is referred to as necessary. Five specimens are produced and measured per level, and the average values thereof are employed.

The inorganic solid electrolyte may be used singly or two or more inorganic solid electrolytes may be used in combination.

The content of the inorganic solid electrolyte in the solid electrolyte layer is preferably 5% by mass or more, more preferably 10% by mass or more, even more preferably 20% by mass or more, still even more preferably 50% by mass or more, particularly preferably 70% by mass or more, and most preferably 90% by mass or more, when a reduction of interface resistance and maintenance of the reduced interface resistance are considered in a case of using the all-solid state laminated secondary battery. The upper limit is not limited as long as the content is 100% by mass or less, but for example, from the same viewpoint as setting the lower limit, preferably 99.9% by mass or less, more preferably 99.5% by mass or less, and particularly preferably 99% by mass or less.

Here, in a case in which the solid electrolyte composition contains the above described active material, regarding the content of the inorganic solid electrolyte in the solid electrolyte composition, the total content of the active material and the inorganic solid electrolyte is preferably in the above-described range.

### - Electrically insulating material -

At least one solid electrolyte layer of the solid electrolyte layers included in the all-solid state laminated secondary battery, preferably all solid electrolyte layers including a hot-melt of an electrically insulating material in one surface-side region (preferably, a void between the solid electrolytes) of the negative electrode collector are preferred. Therefore, at least a part of the voids between the inorganic solid electrolytes exist in the solid electrolyte layer is filled with the hot-melt, and the voids filled with the hot-melt block growth of lithium dendrite to prevent short-circuit from being generated.

As the electrically insulating material having such a function, a material has physical properties being a solid at 100°C (that is, a melting point is higher than 100°C) and being thermally melted in a temperature range of 200°C or less is used. "thermally melted in a temperature range of 200°C or less" means that the material is thermally melted in a temperature range of 200°C or less at 1 atm. By using such an electrically insulating material, a layer is formed using a mixture containing the inorganic solid electrolyte and the electrically insulating material, and then the formed layer can be easily heated to a temperature at which the electrically insulating material is melted. Therefore, by heating the layer, the melted electrically insulating material can be moved to the void between the inorganic solid electrolyte materials by capillary phenomenon. Thereafter, the layer is cooled to solidify the hot-melt of the electrically insulating material, and as a result, it is possible to obtain a state in which the hot-melt of the electrically insulating material is filled along a shape between the inorganic solid electrolyte materials with practically no voids.

Here, "electrically insulating" refers to a property of not allowing electrons to pass through. In the present invention, the "electrically insulating material" is preferably a material having a conductivity of 10⁻⁹/cm or less at a measurement temperature of 25°C.

In the present invention, the surface-side region may include, in addition to the electrically insulating material, another material capable of blocking dendrite growth. In other words, in the present invention, the "hot-melt of the electrically insulating material" refers to not only a hot-melt formed of only the electrically insulating material, but also a hot-melt formed of combining the electrically insulating material and other materials in addition to the electrically insulating material. The other materials can include, for example, aluminum oxide, silicon oxide, boron nitride, cerium oxide, diamond, zeolite, and the like. Other materials are generally fine particles, and a volume average particle diameter is preferably 1 µm or less, more preferably 700 nm or less. By allowing these materials to exist in the surface-side region, the hot-melt easily permeates into the voids between the solid electrolytes due to the capillary phenomenon, and can further enhance the action of blocking the dendrite.

In a case where the surface-side region includes another material in addition to the electrically insulating material, a content of the other material is preferably set to 15 parts by mass or less with respect to 100 parts by mass of the inorganic solid electrolyte material in the solid electrolyte layer, and more preferably 10 parts by mass or less.

The electrically insulating material is preferably a material having higher hardness than dendrite in a solid state in order to block dendrite growth.

Examples of the electrically insulating material can include sulfur, modified sulfur, iodine, a mixture of sulfur and iodine, and among these, sulfur and/or modified sulfur can be suitably used. Sulfur means elemental sulfur (including sulfur existing as a multimer in addition to sulfur itself).

The modified sulfur is obtained by kneading sulfur and a modifier. For example, modified sulfur in which pure sulfur and an olefin compound as a modification additive are kneaded to partially modify sulfur into a sulfur polymer can be obtained. Sulfur or modified sulfur exists in the surface-side region, so that dendrites (alkali metal or alkaline earth metal) grown toward the surface-side region can be physically blocked.

In addition, dendrite comes into contact with sulfur, so that a reaction between dendrite and sulfur may be obtained. For example, in a case where dendrite of metallic lithium comes into contact with sulfur, a reaction of 2Li + S → Li2s occurs, and the growth of the dendrite stops. In a case where such a reaction occurs, a reaction product coexists in the surface-side region. Since the reaction product is an electronically insulating compound having higher hardness than the dendrite metal, the growth of the dendrite can be blocked. That is, the voids preferably have a form containing a compound including alkali metal and/or a compound including alkaline earth metal generated by the above reaction. By having such a form, an effect in which the surface-side region is more reliably filled can also be expected.

The thickness of the inorganic solid electrolyte layer is not particularly limited, but is preferably 10 to 1,000 µm, more preferably 20 µm or more and less than 700 µm, and even more preferably 50 µm or more and less than 700 µm.

### <Negative electrode>

The negative electrode serving as a driving electrode may be formed of the electronic conductor. This negative electrode may be provided adjacent to the electrode laminate 10 as shown in Figs. 1 and 2, or may be provided adjacent to the inorganic solid electrolyte layer as in Example. The negative electrode may be a single layer or multiple layers.

As materials for forming the negative electrode, the above described materials used for the negative electrode collector and the auxiliary collector can be used without particular limitation. Among the above described materials, aluminum, copper, a copper alloy, stainless steel, nickel, titanium, or the like, and furthermore, a material obtained by treating the surface of aluminum, copper, a copper alloy, or stainless steel with carbon, nickel, titanium, or silver is preferred, and aluminum, copper, a copper alloy, or stainless steel is more preferred.

Regarding the shape of the negative electrode, generally, the negative electrodes having a film sheet-like shape are used, but it is also possible to use net-shaped negative electrodes, punched negative electrodes, compacts of lath bodies, porous bodies, foaming bodies, or fiber groups, and the like.

The thickness of the negative electrode (collector) is not particularly limited, but is preferably 1 to 500 µm. In addition, the negative electrode is preferably provided with protrusions and recesses by means of a surface treatment.

### <Positive electrode>

The positive electrode serving as a driving electrode may be formed of the electronic conductor. The positive electrode may be formed with the positive electrode collector as shown in Figs. 1 and 2, but the positive electrode preferably has the positive electrode collector 35 and the positive electrode active material layer 32 and is preferably provided adjacent to the solid electrolyte layer. The positive electrode collector may be a single layer or multiple layers.

As materials for forming the positive electrode collector, the above described materials used for the negative electrode can be used without particular limitation. Among the above described materials, aluminum, an aluminum alloy, stainless steel, nickel, titanium, or the like, and furthermore, a material obtained by treating the surface of aluminum or stainless steel with carbon, nickel, titanium, or silver (a material forming a thin film) is preferred, and, among these, aluminum and an aluminum alloy are more preferred.

Regarding the shape of the positive electrode collector, generally, positive electrode collectors having a film sheet-like shape are used, but it is also possible to use net-shaped collectors, punched collectors, compacts of lath bodies, porous bodies, foaming bodies, or fiber groups, and the like.

The thickness of the positive electrode collector is not particularly limited, but is preferably 1 to 500 µm. In addition, the surface of the positive electrode collector is preferably provided with protrusions and recesses by means of a surface treatment.

The positive electrode active material layer for composing the positive electrode is the same as the positive electrode active material layer for composing the above electrode laminate, and the preferred embodiment is also the same.

In the present invention, a functional layer, a member, or the like may be appropriately interposed or disposed between the respective layers of the negative electrode, the electrode laminate, the solid electrolyte layer, and the positive electrode, or on the outside thereof. In addition, the respective layers may be composed of a single layer or multiple layers.

Each of the all-solid state laminated secondary battery 1A and 1B includes three electrode laminates 30A to 30C, but the present invention is not limited thereto, and one, two, or four or more electrode laminates may be included. The upper limit of the number of electrode laminates included in the all-solid state laminated secondary battery is appropriately set according to a use, an energy density, or the like, and may be, for example, eleven electrode laminates can be used. In addition, the all-solid laminated secondary batteries 1A and 1B each include the electrode laminate 10, but in the present invention can adopt a configuration in which the electrode laminate 10 is not provided, and the solid electrolyte layer 20A is disposed adjacent to the negative electrode 2. In this case, the cell unit 5A includes the negative electrode 2 or the negative electrode collector, the solid electrolyte layer 20A, and the positive electrode active material layer 32A of the electrode laminate 30A.

### [Manufacture of electrode laminate and all-solid state laminated secondary battery]

The electrode laminate and the all-solid state laminated secondary battery can be manufactured by laminating the materials for forming the respective layers in order, and preferably performing a pressing when the respective layers are laminated and/or after the respective layers are laminated in order. By the pressing, the surface shape of the positive electrode active material layer or the unevenness forming particle layer (particle shape of the positive electrode active material or the unevenness forming particles) is transferred to the negative electrode collector, and the negative electrode collector becomes a thin laminate deformed in an uneven shape or a wave form following the surface shape of the above. Furthermore, the surface shape of the solid electrolyte layer also changes to follow the deformation of the negative electrode collector. Therefore, the adhesiveness between the respective layers in the positive electrode active material layer or the unevenness forming particle layer, the negative electrode collector, and the solid electrolyte layer is improved. Particularly, even though a thin layered negative electrode collector having a flat surface, the deformed shape of the negative electrode collector corresponds to the surface shape of the positive electrode active material layer or the like and the solid electrolyte layer, so that the high adhesiveness between the respective layers is obtained.

In a case of manufacturing the electrode laminate and the all-solid state laminated secondary battery having the negative electrode active material layer, the battery is further charged in a state of being restrained and pressed.

The electrode laminate and the all-solid state laminated secondary battery may be manufactured in any environment such as in the atmosphere, under the dried air (the dew point: -20°C or lower), in an inert gas (for example, in an argon gas, in a helium gas, or in a nitrogen gas).

The materials used in the method for manufacturing the electrode laminate and the all-solid state laminated secondary battery are as described above. The material may be a solid such as a powder or a paste. In a case where a paste-like material is used, respective layers can be formed by coating and drying.

In a case where a solid electrolyte composition forming the solid electrolyte layer contains the above described electrically insulating material, the solid electrolyte composition is laminated and then heated to a temperature at which the electrically insulating material melts. The heating may be performed together with the pressing.

A preferred method for manufacturing the electrode laminate and the all-solid state laminated secondary battery will be described in detail.

The preferred method is a method for laminating the electrode laminate on the solid electrolyte layer, and restraining and pressing the entire obtained laminate in a laminating direction to charge the restrained and pressed laminate. In a case of manufacturing an all-solid state laminated secondary battery having a plurality of electrode laminates, the plurality of electrode laminates are laminated in order with the solid electrolyte layer interposed therebetween, and the entire obtained laminate is restrained and pressed in a laminating direction to charge the restrained and pressed laminate.

Regarding the electrode laminate used in the method, an electrode laminate obtained by laminating the positive electrode active material layer on the negative electrode collector or the unevenness forming particle layer may be prepared in advance, and may be prepared in processing of manufacturing the all-solid state laminated secondary battery. In the present invention, it is preferable to manufacture the electrode laminate in the manufacturing process of the all-solid state laminated secondary battery. In a lamination method, a plurality of layers may be laminated at the same time (materials of the plurality of layers may be continuously laminated and pressed at once), but it is preferable to form a layer one by one (press the material of the layer to be formed for each layer) in that the material can be prevented from being mixed to each other.

The laminating order of the solid electrolyte layer and the electrode laminate is not particularly limited as long as the laminating order is an order of a layer composition to function as an all-solid state laminated secondary battery, and in two electrode laminates laminated with the solid electrolyte layer interposed therebetween, a surface (the above one surface) of one electrode laminate on which the negative electrode active material can be deposited and the positive electrode active material layer on the other electrode laminate are laminated in order of facing each other with the solid electrolyte layer interposed therebetween. Focusing on each layer, the positive electrode active material layer or the unevenness forming particle layer, the negative electrode collector (which results in a layer composition of one electrode laminate), the solid electrolyte layer, the positive electrode active material layer, and the negative electrode collector (which results in a layer composition of the other electrode laminate) are laminated in this order or in reverse order.

The number of layers of the solid electrolyte layer and the electrode laminate is set according to the number of electrode laminates (cell units) to be incorporated in the manufactured all-solid state laminated secondary battery.

In a preferred manufacturing method, the layers are appropriately laminated according to a layer composition of the negative electrode and the positive electrode.

In a preferred manufacturing method, in a method for forming a layer one by one (in a case where each layer is pressed and formed), conditions such as the pressing pressure are not limited as long as the negative electrode collector and the positive electrode active material layer can be deformed under the conditions. Examples of the condition include the following pressing pressure.

In a case where the positive electrode active material is pressed, 10 to 300 MPa is preferred, and 50 to 150 MPa is more preferred.

In a case where the solid electrolyte is pressed, 100 to 700 MPa is preferred, and 200 to 600 MPa is more preferred.

In a case where the electrode laminate is pressed, 10 to 300 MPa is preferred, and 50 to 150 MPa is more preferred.

In a preferred manufacturing method, the pressing pressure in a case where the plurality of layers are laminated at the same time is preferably, for example, 30 to 600 MPa, and more preferably 100 to 300 MPa.

The pressing method is not particularly limited, either, and a known method such as a method using a hydraulic cylinder press machine can be applied.

Next, the entire laminate obtained as described above is restrained and pressed in the laminating direction to charge the restrained and pressed laminate. As a result, alkali metal or alkaline earth metal can be deposited on the surface of the negative electrode collector to form the negative electrode active material layer. The restraining and pressing pressure at this time is not particularly limited, but is preferably 0.05 to 20 MPa, more preferably 1 to 10 MPa. In a case where the restraining and pressing pressure is within the above described range, the alkali metal or the alkaline earth metal is well deposited on the negative electrode collector and is easily dissolved during the discharging, so that battery performance is excellent (the battery hardly deteriorates by discharge). In addition, short-circuit due to dendrite can be prevented.

A method for charging the laminate is also not particularly limited, and may be a known method. Charging conditions are appropriately set according to the all-solid state laminated secondary battery. Specifically, a charging voltage may be set to the number of laminate of a charging voltage defined by one cell unit × cell units, and a charging current may be set to a current value defined by one cell unit.

The charging can also be performed by initialization that is preferably performed after manufacturing or before using the all-solid state laminated secondary battery.

Therefore, the electrode laminate and the all-solid state laminated secondary battery according to the embodiment of the present invention are manufactured. The all-solid state laminated secondary battery may be released from the restraining and pressing, but it is preferable that the all-solid state laminated secondary battery is restrained and pressed even during use in that the discharge deterioration can be prevented.

In the preferred manufacturing method described above, the embodiment in which all the negative electrode active material layers are formed by charging is described, but an electrode laminate in which a negative electrode active material layer (for example, Li foil) is laminated in advance can be used. In this case, the negative electrode active material is also deposited on the negative electrode active material layer laminated in advance.

### [Use of all-solid state laminated secondary battery]

The all-solid state laminated secondary battery according to the embodiment of the present invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, memory cards, and the like. Additionally, examples of consumer usages include automobiles (electric cars and the like), electric vehicles, motors, lighting equipment, toys, game devices, road conditioners, watches, strobes, cameras, medical devices (pacemakers, hearing aids, shoulder massage devices, and the like), and the like. Furthermore, the all-solid state laminated secondary battery can be used for a variety of military usages and universe usages. In addition, the all-solid state laminated secondary battery can also be combined with solar batteries.

### Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. "room temperature" means 25°C.

### [Reference Example 1]

### Synthesis of sulfide-based inorganic solid electrolyte

In a glove box under an argon atmosphere (dew point: -70°C), lithium sulfide (Li₂S, manufactured by Aldrich-Sigma, Co., LLC. Purity: >99.98%) (2.42 g) and diphosphoruspentasulfide (P₂S₅, manufactured by Aldrich-Sigma, Co., LLC. Purity: >99%) (3.90 g) were respectively weighed, injected into an agate mortar, and mixed using an agate muddler for five minutes. The mixing ratio between Li₂S and P₂S₅ (Li₂S:P₂S₅) was set to 75:25 in terms of molar ratio.

Sixty six zirconia beads having a diameter of 5 mm were injected into a 45 mL zirconia container (manufactured by Fritsch Japan Co., Ltd.), the full amount of the mixture was injected thereinto, and the container was sealed in an argon atmosphere. The container was set in a planetary ball mill P-7 (trade name) manufactured by Fritsch Japan Co., Ltd., mechanical milling was carried out at a temperature of 25°C and a rotation speed of 510 rpm for 20 hours, and a yellow powder (6.20 g) of a sulfide-based inorganic solid electrolyte (Li-P-S-based glass) was obtained. The average particle diameter D50 (according to the above measurement method) of the Li-P-S-based glass (LPS) was 8 µm.

### [Reference Example 2]

### Preparation of positive electrode active material mixture (composition)

One hundred and eighty zirconia beads having a diameter of 3 mm were injected into a 45 mL zirconia container (manufactured by Fritsch Japan Co., Ltd.), and the inorganic solid electrolyte composition prepared in Reference Example 1 (6.8 g) was added thereto. A positive electrode active material LCO (3.2 g) was added thereto, and then this container was set in a planetary ball mill P-7 (manufactured by Fritsch Japan Co., Ltd.), and the components were continuously stirred at a temperature of 25°C and a rotation speed of 100 rpm for 10 minutes, thereby preparing a positive electrode active material mixture.

The average particle diameter D50 (according to the above measurement method) of the used positive electrode active material was 10 µm.

### [Example 1] Manufacture of all-solid state laminated secondary battery

In this example, an all-solid state laminated secondary battery 1A shown in Fig. 1 was manufactured. Note that, only the negative electrode collector was provided instead of the electrode laminate 10, and the number of laminated electrode laminates was one.

First, 100 mg of the sulfide-based inorganic solid electrolyte (LPS) synthesized in Reference Example 1 was added into a cylinder having an inner diameter of 10 mm manufactured as Macor (registered trademark), and pressed at 130 MPa to temporarily form a (first) solid electrolyte layer 20A.

Next, 20 mg of the positive electrode active material mixture synthesized in Reference Example 2 was added on a surface of the solid electrolyte layer 20A, and then a negative electrode collector (diameter 10 mm, stainless steel foil, thickness 5 µm, and ten-point average surface roughness Rz of surface for forming negative electrode (one surface) 0.5 µm) was disposed on a surface of a positive electrode active material mixture. Next, 25 mg of the LPS synthesized in Reference Example 1 was added again on the negative electrode collector, and pressed at 130 MPa to temporarily form a (first) positive electrode active material layer 32A and a (second) solid electrolyte layer 20B. In this manner, an electrode laminate 30A having a negative electrode collector 31A laminated to follow a surface shape of the positive electrode active material layer 32A was formed inside the cylinder.

Next, 20 mg of the positive electrode active material mixture synthesized in Reference Example 2 was added again on a surface of a solid electrolyte layer 20B, and pressed at 130 MPa to temporarily form a (second) positive electrode active material layer 32B.

Next, the negative electrode collector (diameter 10 mm, stainless steel foil, thickness 5 µm, and ten-point average surface roughness Rz of surface for forming negative electrode (one surface) 0.5 µm) was disposed on the other surface (a side opposite to the positive electrode active material layer 32A) of the solid electrolyte layer 20A. Thereafter, the negative electrode collector and the temporarily formed body were pressed at 550 MPa using a stainless steel piston. This negative electrode collector corresponds to the negative electrode 2 and is hardly deformed.

Thus, a pellet, in which the negative electrode collector that is hardly deformed, the cell unit 5A (thickness 705 µm) that includes the (first) solid electrolyte layer 20A having a thickness of about 600 µm and the positive electrode active material layer 32A, the negative electrode collector 31A, the cell unit 5B (thickness 255 µm) that includes the (second) solid electrolyte layer 20B having a thickness of about 150 µm and the positive electrode active material layer 32B are laminated, was obtained inside the cylinder. The pellet has a configuration in which the solid electrolyte layer 20A, the electrode collector 30A (the positive electrode active material layer 32A and the negative electrode collector 31A), and the solid electrolyte layer 20B are laminated in this order.

Stainless steel pistons are disposed on both surfaces of the pellet obtained above described manner in the cylinder, respectively, and fastened by four bolts to manufacture the all-solid state laminated secondary battery 1A of Example 1 as an evaluation battery (restraining and pressing pressure was torque pressure 0.6 Nm and surface pressure 8 MPa).

Thereafter, the evaluation battery was put into a stainless steel container (in Ar atmosphere), and the container was sealed.

In the above manufacture, all operations using the sulfide solid electrolyte particles were performed in a glove box in a dry Ar atmosphere.

### [Example 2] Manufacture of all-solid state laminated secondary battery

In the manufacture of the all-solid state laminated secondary battery of Example 1, an all-solid state laminated secondary battery 1A of Example 2 was manufactured in the same manner as in the manufacture of the all-solid state laminated secondary battery of Example 1 except that a negative electrode collector 31A was formed by using a negative electrode collector (stainless steel foil, thickness 10 µm, and ten-point average surface roughness Rz of surface for forming negative electrode (one surface) 0.6 µm) instead of the negative electrode collector (stainless steel foil, thickness 5µm).

### [Example 3] Manufacture of all-solid state laminated secondary battery

In this example, an all-solid state laminated secondary battery 1B shown in Fig. 2 was manufactured. Note that, only the negative electrode collector was provided instead of the electrode laminate 10, and the number of laminated electrode laminates was one.

In the manufacture of the all-solid state laminated secondary battery of Example 1, an all-solid state laminated secondary battery 1B of Example 3 was manufactured in the same manner as in the manufacture of the all-solid state laminated secondary battery of Example 1 except that an auxiliary collector (aluminum foil, thickness 20 µm) is laminated on the other surface (between the positive electrode active material layer 32A and the negative electrode collector) of the negative electrode collector (stainless steel foil, thickness 5 µm) to form a negative electrode collector 31A and an auxiliary collector 34A.

### [Comparative Example 1] Manufacture of all-solid state laminated secondary battery

In the manufacture of the all-solid state laminated secondary battery of Example 1, an all-solid state laminated secondary battery of Comparative Example 1 was manufactured in the same manner as in the manufacture of the all-solid state laminated secondary battery of Example 1 except using a negative electrode collector (stainless steel foil, thickness 20 µm, and ten-point average surface roughness Rz of surface for forming negative electrode (one surface) 0.8 µm) instead of the negative electrode collector (stainless steel foil, thickness 5µm).

### [Test Example 1] Confirmation of deformation to follow negative electrode collector

Argon ion milling treatment was performed by irradiating any cross-section of each manufactured evaluation battery with an argon ion beam using IM4000 (manufactured by Hitachi High-Tech Corporation) of an ion milling device under conditions of acceleration voltage 4.0 kV, discharge voltage 1.5 V, and gas flow rate 0.1 ml/min.

The treated cross-section is observed by SEM, a maximum amplitude of undulation (the maximum distance from a protrusion peak to a recessed valley) that is defined as a maximum amplitude of a high frequency component after removing a low frequency component having a length of five times or more than an average particle diameter of a positive electrode active material in a region of 200 µm is measured and compared with the average particle diameter of the used positive electrode active materials. A height of the maximum distance from a protrusion peak to a recessed valley is shown in Table 1 as a magnification with respect to the average particle diameter of the positive electrode active material.

Here, the average particle diameter of the positive electrode active material was determined from an image observed by SEM using the following method. In the image observed by SEM, diameters of any 100 positive electrode active material particles were measured to determine an average value.

### [Test Example 2] Evaluation of short-circuit

Charging and discharging was measured by using each of the manufactured evaluation batteries. Measurement conditions were 25°C, a potential range of 5.0 to 8.5 V, a current density of 0.11 mA/cm², and CC charging and discharging. In a case where internal short-circuit occurs, charging is not completed. Therefore, in that case, charging was completed in 20 hours and discharging was performed.

Presence or absence of the internal short-circuit was determined based on presence or absence of a drastic voltage drop during charging.

In the evaluation of the short-circuit, as the charging and discharging cycle characteristics, it was determined whether or not the internal short-circuit is generated or the number of generated cycles satisfies any of the following evaluation criteria.

### - Evaluation criteria of charging and discharging cycle characteristics -

A: No short-circuit occurs even after 3 cycles or more
B: Short-circuit occurs in 1 cycle or more and less than 3 cycles
C: Short-circuit occurs in less than 1 cycle

### [Test Example 3] Evaluation of discharging capacity (discharge deterioration)

By using each of the manufactured evaluation batteries, capacities in a case of first charging and discharging (respectively referred to as initial charging capacity and initial discharging capacity) were measured respectively, and discharge deterioration was evaluated based on the following evaluation criteria.

The initial charging capacity was obtained by multiplying the current value by the time (current value × time) until a constant current charging was performed at a current density of 0.11 mA/cm² until the voltage rises to 8.5 V, then a constant voltage charging was performed at the voltage of 8.5 V, and the density was decreased to 0.011 mA/cm², in the first charging.

The initial discharging capacity was obtained by multiplying the current value by the time (current value × time) until a constant current discharge is performed at the current density of 0.11 mA/cm² and the voltage value was decreased to 5.0 V, in the first discharging.

The capacity ratio of the initial discharging capacity to the initial charging capacity measured as described above was calculated, and it was determined that the capacity ratio [initial discharging capacity/initial charging capacity] satisfies which of the following evaluation criteria.

### - Evaluation criteria of discharge deterioration -

A: Capacity ratio [initial discharging capacity/initial charging capacity] > 80%
B: 80% ≥ Capacity ratio [initial discharging capacity/initial charging capacity] > 70%
C: 70% ≥ Capacity ratio [initial discharging capacity/initial charging capacity]

### [Test Example 4] Evaluation of mass energy density

In each of the manufactured evaluation batteries, a mass of the positive electrode active material layer, a mass of the positive electrode active material in the positive electrode active material layer, a mass of the current collector, and a mass of the solid electrolyte in the solid electrolyte layer were calculated. From each of the obtained masses, a mass ratio was calculated according to the following expression, and was used as an index of mass energy density. It was determined that the calculated mass ratio satisfies which of the following evaluation criteria, and a mass energy density of each evaluation battery was evaluated.

Mass ratio = mass of positive electrode active material/(mass of positive electrode active material layer + mass of current collector + mass of solid electrolyte)

In the test example, in a case where each evaluation battery includes a plurality of positive electrode active material layers and solid electrolyte layers, the mass of the positive electrode active material layer, the mass of the positive electrode active material, and the mass of the solid electrolyte layer are respectively a total amount thereof. In addition, the mass of the current collector is a total amount of a plurality of current collectors (including the negative electrode collector and the positive electrode collector).

### - Evaluation criteria of mass energy density -

A: mass ratio > 0.18
B: 0.18 ≥ mass ratio > 0.17
C: 0.17 ≥ mass ratio

**[Table 1]**

| | Thickness of negative electrode collector 31A (µm) | Confirmation of deformation to follow negative electrode collector (magnification) | Short-circuit | Dischargin g capacity | Mass energy density |
|---|---|---|---|---|---|
| Example 1 | 5 | 0.23 | A | A | A |
| Example 2 | 10 | 0.11 | B | B | B |
| Example 3 | 5 | 0.20 | B | B | B |
| Comparative Example 1 | 20 | 0.02 | C | C | C |

### As is clear from Table 1, the all-solid state laminated secondary battery of Comparative Example 1 using the negative electrode collector having a large thickness has insufficient deformation of the negative electrode collector, and any of the energy density, the short-circuit, and the discharging capacity (discharge deterioration) is insufficient.

On the other hand, in all of the all-solid-state laminated secondary batteries of Examples 1 to 3 using the negative electrode collector having the specific thickness defined in the present invention, the negative electrode collector is laminated to follow the surface shape of the positive electrode active material layer, and all of the energy density, the short-circuit, and the discharging capacity (discharge deterioration) is excellent. As described above, the present invention is configured as a laminated secondary battery, and furthermore even though the negative electrode collector is thinned to further improve energy density, generation of short-circuit and discharge deterioration can be effectively suppressed.

The present invention has been described together with the embodiment; however, unless particularly specified, the present inventors do not intend to limit the present invention to any detailed portion of the description and consider that the present invention is supposed to be broadly interpreted within the concept and scope of the present invention described in the claims.

The present application claims priority on the basis of JP2017-203674 filed on October 20, 2017, in Japan, the content of which is incorporated herein by reference.

### Explanation of References

- 1A, 1B: all-solid state laminated secondary battery
- 2: negative electrode
- 3: positive electrode
- 5A to 5D: cell unit
- 6: operation portion
- 10: electrode laminate
- 11A, 31A to 31C: negative electrode collector
- 12: unevenness forming particle layer
- 13A, 33A to 33C: negative electrode active material layer
- 14, 34A to 34C: auxiliary collector
- 20A to 20D: solid electrolyte layer
- 30A to 30C: electrode laminate
- 32, 32A to 32C: positive electrode active material layer
- 35: positive electrode collector

## Claims

1. An electrode laminate comprising:
a negative electrode collector having one surface on which a negative electrode active material can be deposited; and
a positive electrode active material layer containing a positive electrode active material and a solid electrolyte or an unevenness forming particle layer, the positive electrode active material layer or the unevenness forming particle layer being laminated on the other surface of the negative electrode collector,
wherein the negative electrode collector has a thickness of 15 µm or less, and is a thin laminate formed by laminating the negative electrode collector to follow a surface shape of the positive electrode active material layer or the unevenness forming particle layer.

2. The electrode laminate according to claim 1, wherein the one surface of the negative electrode collector has a ten-point average surface roughness Rz of 1.5 µm or less.

3. An all-solid state laminated secondary battery having at least one electrode laminate according to claim 1 or 2.

4. The all-solid state laminated secondary battery according to claim 3, wherein
the electrode laminate is laminated on a solid electrolyte layer, and
at least one of the positive electrode active material of the electrode laminate or the solid electrolyte of the solid electrolyte layer has a metallic element belonging to Group I or II of the periodic table.

5. The all-solid state laminated secondary battery according to claim 4, wherein
at least one layer of the solid electrolyte layer includes a hot-melt of an electrically insulating material that is a solid at 100°C and is thermally melted at a temperature range of 200°C or lower in one surface-side region of the negative electrode collector.

6. The all-solid state laminated secondary battery according to claim 4 or 5, further comprising a negative electrode active material layer between the one surface of the electrode laminate and the solid electrolyte layer.

7. A method for manufacturing the all-solid state laminated secondary battery according to claim 6 comprising:
laminating the solid electrolyte layer and the electrode laminate; and
restraining and pressing the entire obtained laminate in a laminating direction to charge the restrained and pressed laminate.

8. The method for manufacturing the all-solid state laminated secondary battery according to claim 7, wherein the one surface of the negative electrode collector has a ten-point average surface roughness Rz of 1.5 µm or less.
